(19) Europäisches Patentamt / European Patent Office / Office européen des brevets

(11) **EP 4 364 943 A1**

(12) **EUROPEAN PATENT APPLICATION**
published in accordance with Art. 153(4) EPC

(43) Date of publication:
**08.05.2024 Bulletin 2024/19**

(21) Application number: **22833106.2**

(22) Date of filing: **27.06.2022**

(51) International Patent Classification (IPC):
**B32B 27/32** (2006.01)　　　**B32B 1/02** (2006.01)
**B65D 35/10** (2006.01)

(52) Cooperative Patent Classification (CPC):
**B32B 1/00; B32B 27/32; B65D 35/10**

(86) International application number:
**PCT/JP2022/025589**

(87) International publication number:
**WO 2023/276959 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.07.2021　JP 2021110865**

(71) Applicant: **TOPPAN INC.**
**Tokyo 110-0016 (JP)**

(72) Inventors:
- **IMAIZUMI Shukiko**
  **Tokyo 110-0016 (JP)**
- **YAMASHITA Kaori**
  **Tokyo 110-0016 (JP)**

(74) Representative: **Hoffmann Eitle**
**Patent- und Rechtsanwälte PartmbB**
**Arabellastraße 30**
**81925 München (DE)**

(54) **LAMINATE FOR LAMINATED TUBE, AND LAMINATED TUBE**

(57)　The present disclosure relates to a laminate for a laminated tube, the laminate including: a first heat seal layer, a substrate layer, and a second heat seal layer, wherein the first heat seal layer, the substrate layer, and the second heat seal layer contain a polyolefin; each of the first heat seal layer and the second heat seal layer is laminated with the substrate layer by a dry lamination method; a proportion of the thickness of the second heat seal layer to the thickness of the first heat seal layer is 0.9 to 1.1; and the laminate has a thickness of 180 $\mu$m to 300 $\mu$m.

FIG.1

**Description**

[Technical Field]

The present invention relates to a laminate for a laminated tube and a laminated tube.

[Background Art]

A cylindrical sleeve that serves as a body portion of a laminated tube is formed by welding and joining edges (side seam portions) of a resin material of a raw sheet. The welded edges become distorted due to rapid heating and cooling during welding. Thus, the resin in a portion around the weld (non-side seam portion) is pulled, and the side seam portions become convex, so that the cross section of the sleeve is distorted into an egg shape. In consideration of suitability for subsequent processes, the thus distorted cross section of the sleeve is preferably corrected so as to have a shape close to a perfect circle.

In order to deal with this distortion, a method for manufacturing a tubular container has been proposed, which includes a step of rolling a raw sheet and welding both edges to form a sleeve, a step of cutting the sleeve at regular intervals, and a step of welding a head molded body having a mouth and a shoulder to one end of the sleeve, wherein the method further includes a step of spraying water vapor onto the outer periphery of the sleeve (see, for example, PTL 1).

[Citation List]

[Patent Literature]

PTL 1: JP 2011-121342 A

[Summary of the Invention]

[Technical Problem]

Although the method of PTL 1 can correct, to some extent, the distortion on both ends of the welded portion of the raw sheet, it may be difficult to correct changes in cross-sectional shape accompanied by physical deformation of the welded portion due to the laminated structure.

The present invention has been made in light of the above circumstances, and an object thereof is to provide a laminate for a laminated tube, which makes it possible to obtain a cylindrical sleeve having good circularity. Another object of the present invention is to provide a laminated tube formed from the laminate for a laminated tube.

[Solution to Problem]

A laminate for a laminated tube according to an aspect of the present invention includes: a first heat seal layer, a substrate layer, and a second heat seal layer. The first heat seal layer, the substrate layer, and the second heat seal layer contain a polyolefin; each of the first heat seal layer and the second heat seal layer is laminated with the substrate layer by a dry lamination method; a proportion of the thickness of the second heat seal layer to the thickness of the first heat seal layer is 0.9 to 1.1; and the laminate has a thickness of 180 $\mu$m to 300 $\mu$m.

The above-described laminate for a laminated tube has a specific layer structure and a specific thickness, and the layers are laminated by a specific lamination method. Thus, a cylindrical sleeve having good circularity can be obtained in the tube molding process. Due to the sleeve having good circularity, it is possible to suppress filling defects at the time of filling contents, and to obtain a laminated tube having excellent self-supporting properties, squeezability, and the like. Moreover, it can be said that the above-described laminate for a laminated tube in which the first heat seal layer, the substrate layer, and the second heat seal layer all contain a polyolefin has excellent recycling suitability.

Good circularity means that, when a cylindrical sleeve is prepared using the laminate for a laminated tube, the cross-sectional shape of the sleeve is less distorted from a perfect circle.

In an embodiment, the laminate for a laminated tube may further include an inorganic oxide layer on the substrate layer.

In an embodiment, the inorganic oxide layer may contain aluminum oxide or silicon oxide.

In an embodiment, the polyolefin may be polypropylene.

In an embodiment, a content of the polyolefin may be 90 mass% or more relative to the total amount of the laminate.

In an embodiment, the laminate for a laminated tube may further include an adhesive layer between the first heat seal layer and the substrate layer and between the second heat seal layer and the substrate layer. The adhesive layer may have a Tg of 20°C or higher.

A laminated tube according to an aspect of the present invention includes the above-described laminate for a laminated tube.

[Advantageous Effects of the Invention]

According to the present invention, it is possible to provide a laminate for a laminated tube, which makes it possible to obtain a cylindrical sleeve having good circularity. Also, according to the present invention, it is possible to provide a laminated tube formed from the laminate for a laminated tube.

[Brief Description of the Drawings]

Fig. 1 is a schematic cross-sectional view of a laminate for a laminated tube according to an embodiment.
Fig. 2 is a schematic cross-sectional view of a laminate for a laminated tube according to another embodiment.
Fig. 3 is a front view of a laminated tube according to an embodiment.

[Description of the Embodiments]

Preferred embodiments of the present disclosure will now be described in detail with reference to the drawings in some cases. In the drawings, the same or corresponding components are given the same reference signs to avoid duplicate description. Also, dimensional ratios in the drawings are not limited to those shown in the drawings.

<Laminate for laminated tube>

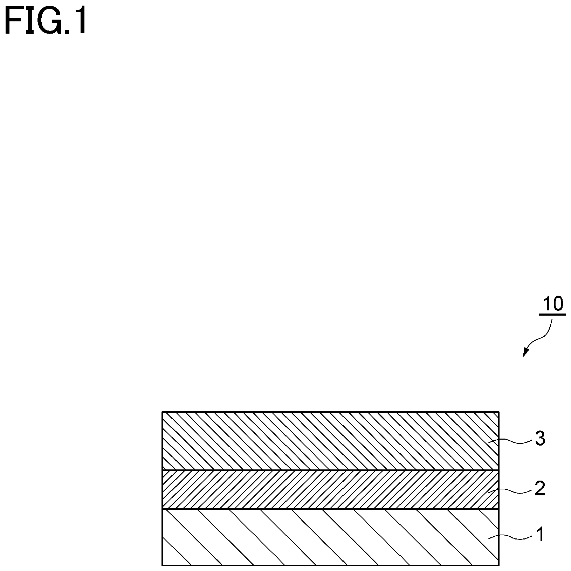

Fig. 1 is a schematic cross-sectional view of a laminate for a laminated tube according to an embodiment. A laminate 10 for a laminated tube includes a first heat seal layer 1, a substrate layer 2, and a second heat seal layer 3. A laminate for a laminated tube may be simply referred to as a laminate.

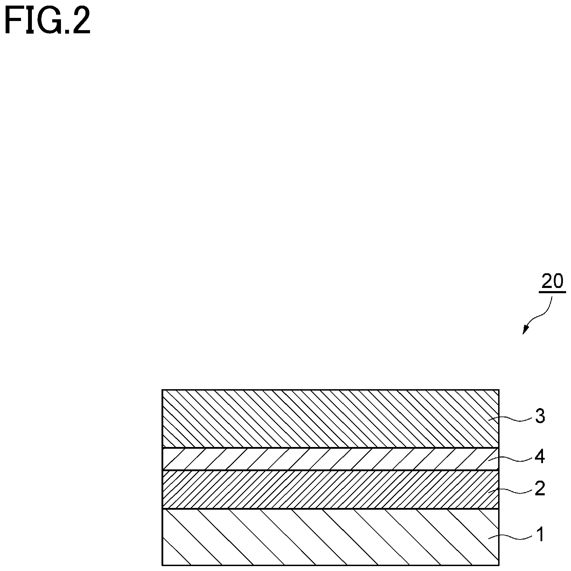

Fig. 2 is a schematic cross-sectional view of a laminate for a laminated tube according to another embodiment. A laminate 20 for a laminated tube includes a first heat seal layer 1, a substrate layer 2, an inorganic oxide layer 4, and a second heat seal layer 3.

The thickness of the laminate may be 180 $\mu$m to 300 $\mu$m, preferably 200 $\mu$m to 280 $\mu$m, and more preferably 200 $\mu$m to 250 $\mu$m. Due to the thickness of the laminate for a laminated tube being larger than or equal to the lower limit, good circularity can be maintained during sleeve formation, and good stiffness can be easily obtained. On the other hand, due to the thickness being smaller than or equal to the upper limit, it is possible to obtain a laminated tube which achieves both squeezing suitability and self-supporting properties.

Each of the first heat seal layer and the second heat seal layer is laminated with the substrate layer of the laminate by a dry lamination method. The laminate is obtained by thermocompression-bonding each of the first heat seal layer and the second heat seal layer via an adhesive layer formed on the substrate layer. As will be described later, the laminate obtained by dry lamination can be said to include an adhesive layer between the first heat seal layer and the substrate layer and between the second heat seal layer and the substrate layer.

The adhesive layer is formed by applying an adhesive onto the substrate layer by a coating method such as roll coating, gravure coating, or kiss coating, or a printing method, and drying it. The amount of the adhesive used (weight of the adhesive layer) is not particularly limited, but can be 0.1 g/m$^2$ to 10 g/m$^2$, and preferably 1 g/m$^2$ to 5 g/m$^2$, in a dry state.

From the viewpoint of recycling suitability, the first heat seal layer, the substrate layer, and the second heat seal layer may all contain a polyolefin, may all contain polypropylene or polyethylene, or may all contain polypropylene. A content of the polyolefin may be 90 mass% or more, and preferably 95 mass% or more, relative to the total amount of the laminate. The upper limit of the polyolefin content is not particularly limited, but can be 98 mass% from the viewpoint of recycling suitability.

(Substrate layer)

The substrate layer contains a polyolefin. As the substrate layer, a uniaxially stretched or biaxially stretched polyolefin film can be used. In this case, the substrate layer can be called a stretched substrate.

The polyolefin is not particularly limited, and examples thereof include polyethylene, polypropylene, polybutene, and cycloolefin polymers. From the viewpoint of recyclability and high-temperature treatment resistance, polypropylene can be used as the polyolefin.

The polypropylene may be any of a homopolymer, a random copolymer, and a block copolymer. The polypropylene homopolymer is a homopolymer of propylene; the polypropylene random copolymer is a random copolymer of propylene and any other α-olefin than propylene (e.g., ethylene or butene-1,4-methyl-1-pentene); and the polypropylene block copolymer is a copolymer having a polymer block formed of propylene and a polymer block formed of any other α-olefin than propylene as described above.

Among these polypropylenes, a homopolymer or a random copolymer can be used from the viewpoint of transparency. A homopolymer can be used when the rigidity, heat resistance or the like of the laminate is prioritized, and a random copolymer can be used when the impact resistance or the like is prioritized.

As the polypropylene, a biomass-derived polypropylene, or a mechanically recycled or chemically recycled polypropylene may be used.

The substrate layer may be composed of a single layer containing a polyolefin, or may be composed of a plurality of layers containing a polyolefin. When the substrate layer is composed of a plurality of layers, the materials for the layers may be the same or different. When the substrate layer is composed of a plurality of layers, the layers may be laminated by dry lamination. At least one of the layers constituting the substrate layer may be a support layer for an inorganic oxide layer (a layer for forming an inorganic oxide layer).

The substrate layer can contain an anti-blocking agent, an antioxidant, an ultraviolet absorber, an antistatic agent, a flame retardant, an inorganic filler, an organic filler, a dye, a pigment, and the like, as long as the desired effects are achieved.

The content of the polyolefin in the substrate layer can be 85 mass% or more, and preferably 95 mass% or more.

The substrate layer may be subjected to a surface-treatment. This improves adhesion between the substrate layer and adjacent layers. The method of the surface-treatment is not particularly limited, and examples thereof include physical treatments such as corona discharge treatment, ozone treatment, low-temperature plasma treatment using oxygen gas and/or nitrogen gas, and glow discharge treatment, and chemical treatments such as oxidation treatment using a chemical.

The thickness of the substrate layer (when the substrate layer includes a plurality of layers, the total thickness of the layers) can be 15 μm to 70 μm, preferably 15 μm to 50 μm, and more preferably 20 μm to 40 μm. When the thickness of the substrate layer is within the above range, processing such as printing or lamination can be easily performed.

(First heat seal layer and second heat seal layer)

The first heat seal layer and the second heat seal layer each contain a polyolefin. The first heat seal layer and the second heat seal layer may be collectively referred to as a heat seal layer. The heat seal layer can be called a surface substrate layer having heat-sealing properties.

The polyolefin is not particularly limited, and examples thereof include polyethylene and polypropylene. From the viewpoint of recyclability, polypropylene can be used as the polyolefin.

Examples of the polyethylene include a low-density polyethylene resin (LDPE), a linear low-density polyethylene resin (LLDPE), a medium-density polyethylene resin (MDPE), an ethylene/vinyl acetate copolymer, and an ethylene/α-olefin copolymer.

From the viewpoint of recyclability, an unstretched polypropylene (CPP) can be used as the polypropylene. Examples of the polypropylene include a homopolymer of propylene, a copolymer of propylene and an unsaturated carboxylic acid, a copolymer of propylene and an unsaturated carboxylic acid ester, and random copolymers or block copolymers of a propylene/α-olefin copolymer and an ethylene-propylene copolymer. Examples of the unsaturated carboxylic acid include acrylic acid, methacrylic acid, maleic anhydride, and fumaric acid, and one or two or more thereof can be used to be copolymerized with propylene. Examples of the unsaturated carboxylic acid ester include an acrylic acid ester, a methacrylic acid ester, a maleic anhydride ester, and a fumaric acid ester, and one or two or more thereof can be used to be copolymerized with propylene.

As the polyolefin, a biomass-derived polyethylene or polypropylene, or a mechanically recycled polyethylene or polypropylene may be used.

The heat seal layer may be composed of a single layer containing a polyolefin, or may be composed of a plurality of layers each containing a polyolefin. When the heat seal layer is composed of a plurality of layers, the layers may be laminated by coextrusion, and the materials for the layers may be the same or different.

The heat seal layer can contain an anti-blocking agent, an antioxidant, an ultraviolet absorber, an antistatic agent, a flame retardant, an inorganic filler, an organic filler, a dye, a pigment, and the like, as long as the desired effects are achieved.

The content of the polyolefin in the heat seal layer can be 85 mass% or more, and preferably 95 mass% or more.

The thickness of the heat seal layer can be 50 $\mu$m to 120 $\mu$m, and preferably 70 $\mu$m to 110 $\mu$m. Due to the thickness of the heat seal layer being larger than or equal to the lower limit, it becomes easy to obtain sufficient sealing strength and excellent self-supporting properties. Due to the thickness being smaller than or equal to the upper limit, it becomes easy to obtain excellent squeezing suitability of a laminated tube.

From the viewpoint of obtaining a sleeve with good circularity, a proportion of the thickness of the second heat seal layer to the thickness of the first heat seal layer is 0.9 to 1.1, preferably 0.95 to 1.05, and more preferably 1. Due to the thickness of the first heat seal layer and the second heat seal layer being equal to each other, that is, the front and back heat seal layers being symmetrical to each other, it is possible to maintain good circularity during sleeve formation.

(Inorganic oxide layer)

The laminate may further include an inorganic oxide layer on the substrate layer. The inorganic oxide layer can be called a barrier layer. The inorganic oxide layer further suppresses permeation of oxygen and water vapor, and thus the storage stability of the contents is further improved. When the body portion of a laminated tube is formed from the laminate, the inorganic oxide layer can be provided on a surface of the substrate layer on a side facing away from the contents, from the viewpoint of barrier performance.

The inorganic oxide layer can contain aluminum oxide or silicon oxide. As compared with an embodiment in which a metal layer such as an aluminum foil or an aluminum deposited film is used, a metal detector can be used to inspect for metal foreign matter after the contents are filled and packaged.

The inorganic oxide layer may be a layer (transparent or translucent) that sufficiently transmits visible light. This makes it easy to visually confirm the color and degree of transparency of the contents from the outside. A film including an inorganic oxide layer on the support layer for the inorganic oxide layer described above can be called a transparent barrier film.

The inorganic oxide layer may be an inorganic oxide deposited layer. That is, the inorganic oxide layer may be formed on a surface of the substrate layer by a vapor deposition method such as a physical vapor phase growth method or a chemical vapor phase growth method. On the inorganic oxide layer, an overcoat layer having barrier performance may be formed by a coating method such as roll coating, gravure roll coating, or kiss coating, or a printing method such as gravure printing, offset printing, or transfer printing.

The thickness of the inorganic oxide layer can be 10 nm to 100 nm, and preferably 20 nm to 50 nm. Due to the thickness of the inorganic oxide layer being larger than or equal to the lower limit, it becomes easy to achieve sufficient barrier performance. Due to the thickness being smaller than or equal to the upper limit, it becomes easy to suppress deterioration in barrier performance due to cracking.

(Adhesive layer)

In the laminate, each of the first heat seal layer and the second heat seal layer is laminated with the substrate layer by a dry lamination method. That is, the laminate can be said to include an adhesive layer (adhesive layer for dry lamination) between the first heat seal layer and the substrate layer and between the second heat seal layer and the substrate layer.

Examples of the adhesive contained in the adhesive layer include: polyvinyl acetate adhesives; polyacrylic acid ester adhesives formed of homopolymers of acrylic acid ethyl ester, butyl ester, 2-ethylhexyl ester, and the like, or copolymers of these with methyl methacrylate, acrylonitrile, styrene, and the like; cyanoacrylate adhesives; ethylene copolymer adhesives formed of copolymers of ethylene and monomers such as vinyl acetate, ethyl acrylate, acrylic acid, and methacrylic acid; cellulose adhesives; polyester adhesives; polyamide adhesives; polyimide adhesives; amino resin adhesives formed of urea resins, melamine resins, and the like; phenolic resin adhesives; epoxy adhesives; polyurethane adhesives; and reactive (meth)acrylic acid adhesives.

From the viewpoint of forming an adhesive layer with excellent flexibility and bendability, a polyurethane adhesive can be used as the adhesive. For example, an adhesive whose main component is a polyether polyurethane resin, a polyester polyurethane resin, or a polyacrylate polyurethane resin can be used. When a polyurethane adhesive is used, suitability for processing such as lamination processing or printing processing can be easily improved.

Embodiments of the adhesive include, for example, aqueous type, solution type, emulsion type, and dispersion type. Forms of the adhesive include, for example, film shape, sheet shape, powder shape, and solid shape. Reaction mechanisms of the adhesive include, for example, chemical reaction type, solvent volatilization type, heat welding type, and thermal pressure type. A non-solvent laminate free of an organic solvent component is preferred from the viewpoint of environmental friendliness.

The adhesive layer preferably has a certain level of heat resistance. There is a tendency that it is difficult to maintain the shape of the polyolefin material used in the laminate when subjected to heat of, for example, about 40°C to 50°C during the manufacture of the laminate. Therefore, due to the adhesive layer having a certain level of heat resistance (difficulty in softening), the shape stability of the laminate containing the polyolefin material can be further improved. From this viewpoint, the Tg of the adhesive layer can be 20°C or higher, preferably 30°C or higher, and more preferably 40°C or higher. Although the upper limit of the Tg is not particularly limited, but it can be set to about 100° C since too high Tg of the adhesive layer tends to cause weak initial adhesion. The Tg is a value measured in accordance with JIS K 7121 Testing Methods for Transition Temperatures of Plastics.

(Printed layer)

The laminate may further include a printed layer on a surface of the substrate layer. The printed layer includes an image composed of a character, a pattern, a symbol, and a combination thereof. The method for forming the printed layer is not particularly limited, and can be, for example, a conventionally known printing method such as gravure printing, offset printing, or flexographic printing.

When the body portion of a laminated tube is formed from the laminate, the printed layer can be provided on a surface of the substrate layer on an inorganic oxide layer side, from the viewpoint of design.

<Laminated tube>

The above laminate can be used for the body portion of a laminated tube. That is, the laminated tube includes the above-described laminate for a laminated tube. The laminated tube can also be called a tubular container.

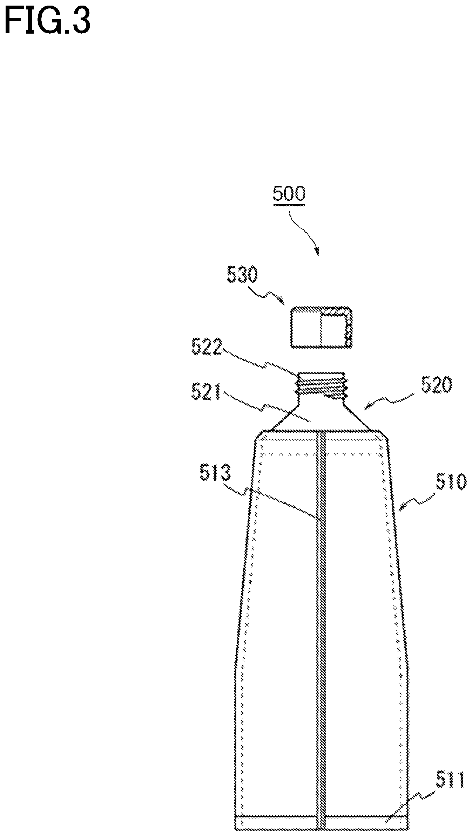

Fig. 3 is a front view of a laminated tube according to an embodiment. A laminated tube 500 shown in Fig. 3 includes a body portion 510 formed of the above-described laminate, a spout portion 520 attached to one end of the body portion 510, and a cap 530 to be attached to the spout portion 520. The body portion 510 is a cylindrical member formed by bonding the heat seal layers of the laminate to each other in a seal portion 513 and closing a bottom portion 511 located at the other end opposite to one end to which the spout portion 520 is attached, whereby the contents can be accommodated therein. The spout portion 520 is composed of a spout plug portion 522 for discharging the contents, and a shoulder 521 for guiding the contents to the spout plug portion 522, which is held by the body portion 510. A cap 530 is a member that can close and open an opening of the spout plug portion 522.

As the shape of the laminated tube, the shoulder may be provided perpendicular to the body portion without being tapered, in order that the contents can be squeezed out to the end. Although the materials for the spout portion and the cap of the laminated tube are not particularly limited, the recycling suitability can be further improved by using the same resin as that for the substrate layer and the heat seal layer.

<Summary of present embodiment>

[Invention 1]

A laminate for a laminated tube, the laminate including:

a first heat seal layer, a substrate layer, and a second heat seal layer, wherein
the first heat seal layer, the substrate layer, and the second heat seal layer contain a polyolefin;
each of the first heat seal layer and the second heat seal layer is laminated with the substrate layer by a dry lamination method;
a proportion of the thickness of the second heat seal layer to the thickness of the first heat seal layer is 0.9 to 1.1; and
the laminate has a thickness of 180 $\mu$m to 300 $\mu$m.

[Invention 2]

The laminate for a laminated tube according to Invention 1, further including an inorganic oxide layer on the substrate layer.

[Invention 3]

The laminate for a laminated tube according to Invention 2, wherein the inorganic oxide layer contains aluminum oxide or silicon oxide.

[Invention 4]

The laminate for a laminated tube according to any one of Inventions 1 to 3, wherein the polyolefin is polypropylene.

[Invention 5]

The laminate for a laminated tube according to any one of Inventions 1 to 4, wherein a content of the polyolefin is 90 mass% or more relative to the total amount of the laminate.

[Invention 6]

The laminate for a laminated tube according to any one of Inventions 1 to 5, further including an adhesive layer between the first heat seal layer and the substrate layer and between the second heat seal layer and the substrate layer, wherein the adhesive layer has a Tg of 20°C or higher.

[Invention 7]

A laminated tube including the laminate for a laminated tube according to any one of Inventions 1 to 6.

[Examples]

Hereinafter, the present invention will be more particularly described by way of examples, but is not limited thereto.

<Preparation of laminate for laminated tube>

(Example 1)

A 20 $\mu$m thick OPP film (U-1, manufactured by Mitsui Chemicals Tohcello, Inc.) and a silicon oxide deposited layer surface of a 18 $\mu$m thick OPP film (manufactured by TOPPAN INC.) provided with a 50 nm thick silicon oxide deposited layer were laminated via an adhesive by dry lamination. CPP films (UT100, manufactured by OKAMOTO INDUSTRIES, INC.) having a thickness of 100 $\mu$m were laminated, as heat seal layers, on both surfaces of the resultant laminate via an adhesive by dry lamination. As the adhesive, a two-component reactive polyester polyurethane resin (A626/A50, manufactured by Mitsui Chemicals, Inc.; Tg after formation of the adhesive layer: 26°C) was used. The amount of the adhesive used was 3.5 g/m$^2$ (dry state). Thus, a laminate for a laminated tube was obtained. The second heat seal layer thickness/first heat seal layer thickness was 1.

(Example 2)

A laminate was obtained in the same manner as in Example 1, except that a 18 $\mu$m thick OPP film (TI, manufactured by Max Speciality Films Limited) was used instead of the 20 $\mu$m thick OPP film, and that a 80 $\mu$m thick CPP film (ZK99S, manufactured by Toray Industries, Inc.) was used instead of the 100 $\mu$m thick CPP film. The second heat seal layer thickness/first heat seal layer thickness was 1.

(Example 3)

A laminate was obtained in the same manner as in Example 1, except that the 20 $\mu$m thick OPP film was not used, and that a 120 $\mu$m thick CPP film (ZK99S, manufactured by Toray Industries, Inc.) was used instead of the 100 $\mu$m thick CPP film. The second heat seal layer thickness/first heat seal layer thickness was 1.

(Comparative Example 1)

A laminate was obtained in the same manner as in Example 1, except that a 60 $\mu$m thick CPP film (ZK99S, manufactured by Toray Industries, Inc.) was used instead of the 100 $\mu$m thick CPP film. The second heat seal layer thickness/first heat seal layer thickness was 1.

(Comparative Example 2)

A laminate was obtained in the same manner as in Example 3, except that a 60 μm thick CPP film (ZK207, manufactured by Toray Industries, Inc.) and a 200 μm thick CPP film (AT40S, manufactured by OKAMOTO INDUSTRIES, INC.) were used instead of the 120 μm thick CPP film. The ratio of second heat seal layer thickness/first heat seal layer thickness was 3.3.

(Comparative Example 3)

A laminate was obtained in the same manner as in Example 3, except that a 160 μm thick CPP film (ZK207, manufactured by Toray Industries, Inc.) was used instead of the 120 μm thick CPP film. The second heat seal layer thickness/first heat seal layer thickness was 1.

(Comparative Example 4)

A 150 μm thick PE film (FC-S, manufactured by Mitsui Chemicals Tohcello, Inc.), a 12 μm thick PET film, and a 12 μm thick PET film (manufactured by TOPPAN INC.) provided with a 50 nm thick silicon oxide deposited layer were laminated, by extrusion lamination, using 40 μm thick LDPE (LC600A, manufactured by Japan polyethylene Corporation) between the respective layers.

A 120 μm thick PET film (FC-S, manufactured by Mitsui Chemicals Tohcello, Inc.) was laminated on the 12 μm thick PET film provided with a silicon oxide deposited layer, in the same manner as in Example 1, via an adhesive by dry lamination. Thus, a laminate was obtained.

<Various evaluations>

The laminates obtained in the examples were evaluated in the following way. The results are shown in Table 1. The symbol "//" in the "Structure" column of Table 1 indicates the position of the inorganic oxide layer.

(Stiffness)

A strip-shaped film having a width of 15 mm and a length of 50 mm was cut out from both the MD and TD directions of the laminate obtained in each of the examples. The cut-out strip-shaped film was set in a loop stiffness tester manufactured by TOYO SEIKI SEISAKU-SHO, LTD., and the resilience was measured at room temperature (25°C) with an indentation amount of 10 mm. This measurement was performed five times using different samples. The average of the resilience values (mN) obtained in the measurements was defined as stiffness (loop stiffness).

(Ellipticity (inner diameter increment))

Ten cylindrical sleeves were prepared using the laminate obtained in each of the examples. The laminate was used such that the layer indicated on the left side in the "Structure" column of Table 1 constituted the outer surface of the sleeve. The sleeve inner diameter (diameter) was designed to be 35 mm when the sleeve cross section was brought in a perfect circle shape. The overlap width of the laminate was 2 mm.

The maximum inner diameter (in the long axis direction of the ellipse) A mm of the sleeve cross section was measured at room temperature (25°C), and the increase percentage (%) of the inner diameter relative to the inner diameter of 35 mm when the sleeve cross section was in a perfect circle shape was calculated. This operation was performed ten times using different sleeves. Then, the average of the calculated increase percentage values was defined as ellipticity (%). This was used to evaluate the circularity.

$$\text{Ellipticity } (\%) = 100 \times (A\text{-}35)/35$$

[Table 1]

| | | Structure | Lamination method | Total thickness | Polyolefin content | Stiffness [mN] | | Ellipticity (external shape increment) |
|---|---|---|---|---|---|---|---|---|
| | | | | [μm] | [mass%] | MD | TD | [%] |
| Example | 1 | CPP100/OPP20//Barrier OPP18/CPP100 | Dry lamination | 247 | 96 | 2063 | 2033 | 7.6 |
| | 2 | CPP80/OPP18//Barrier OPP18/CPP80 | Dry lamination | 205 | 95 | 1853 | 1932 | 6.8 |
| | 3 | CPP120/Barrier OPP18/CPP120 | Dry lamination | 264 | 97 | 2184 | 2205 | 8.2 |
| Comparative Example | 1 | CPP60/OPP20//Barrier OPP18/CPP60 | Dry lamination | 167 | 94 | 1464 | 1487 | 16.4 |
| | 2 | CPP60//Barrier OPP18/CPP200 | Dry lamination | 284 | 98 | 2102 | 2560 | 13.3 |
| | 3 | CPP160/Barrier OPP18/CPP160 | Dry lamination | 344 | 98 | 2588 | 2643 | 10.9 |
| | 4 | PE150/LDPE40/PET12/LDPE40/Barrier PET12/PE120 | Extrusion/dry lamination | 377 | 90 | 2753 | 2863 | 11.6 |

[Reference Signs List]

| 1 | First heat seal layer |
| 2 | Substrate layer |
| 3 | Second heat seal layer |
| 4 | Inorganic oxide layer |
| 10, 20 | Laminate for laminated tube |
| 510 | Body portion |
| 511 | Bottom portion |
| 513 | Seal portion |
| 520 | Spout portion |
| 521 | Shoulder |
| 522 | Spout plug portion |
| 530 | Cap |
| 500 | Laminated tube |

**Claims**

1. A laminate for a laminated tube, the laminate comprising:

   a first heat seal layer, a substrate layer, and a second heat seal layer, wherein
   the first heat seal layer, the substrate layer, and the second heat seal layer contain a polyolefin;
   each of the first heat seal layer and the second heat seal layer is laminated with the substrate layer by a dry lamination method;
   a proportion of the thickness of the second heat seal layer to the thickness of the first heat seal layer is 0.9 to 1.1; and
   the laminate has a thickness of 180 $\mu$m to 300 $\mu$m.

2. The laminate for a laminated tube according to claim 1, further comprising an inorganic oxide layer on the substrate layer.

3. The laminate for a laminated tube according to claim 2, wherein
   the inorganic oxide layer contains aluminum oxide or silicon oxide.

4. The laminate for a laminated tube according to claim 1 or 2, wherein
   the polyolefin is polypropylene.

5. The laminate for a laminated tube according to claim 1 or 2, wherein
   a content of the polyolefin is 90 mass% or more relative to the total amount of the laminate.

6. The laminate for a laminated tube according to claim 1 or 2, further comprising an adhesive layer between the first heat seal layer and the substrate layer and between the second heat seal layer and the substrate layer, wherein the adhesive layer has a Tg of 20°C or higher.

7. A laminated tube comprising the laminate for a laminated tube according to claim 1 or 2.

FIG.1

# FIG.2

# FIG.3

## INTERNATIONAL SEARCH REPORT

| International application No. |
|---|
| **PCT/JP2022/025589** |

**A. CLASSIFICATION OF SUBJECT MATTER**

*B32B 27/32*(2006.01)i; *B32B 1/02*(2006.01)i; *B65D 35/10*(2006.01)i
FI:    B32B27/32 E; B32B1/02; B65D35/10 A

According to International Patent Classification (IPC) or to both national classification and IPC

**B. FIELDS SEARCHED**

Minimum documentation searched (classification system followed by classification symbols)

B32B1/02; B32B27/32; B65D35/00-35/42; B65D65/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/193562 A1 (ALBEA SERVICES) 01 October 2020 (2020-10-01) | 1-7 |
| Y | claims, p. 1, line 1 to p. 8, line 14, p. 10, line 5 to p. 15, bottom line, fig. 1-6 | 1-7 |
| X | JP 2017-65709 A (DAINIPPON PRINTING CO LTD) 06 April 2017 (2017-04-06) | 1-4, 6, 7 |
| Y | claims, paragraphs [0070]-[0075], [0100]-[0102], [0116]-[0140], fig. 1-15 | 6 |
| Y | KR 10-2017-0000170 A (KIM, Jae-Chan) 02 January 2017 (2017-01-02) claims, paragraphs [0001]-[0003], [0017], [0026]-[0034], [0039], [0044]-[0055], fig. 1-3 | 1-7 |
| Y | JP 2007-30222 A (TOPPAN PRINTING CO LTD) 08 February 2007 (2007-02-08) claims, paragraphs [0008], [0021], [0024], [0033]-[0035] | 6 |
| Y | JP 2006-210573 A (DAINIPPON PRINTING CO LTD) 10 August 2006 (2006-08-10) paragraph [0089] | 6 |
| A | JP 2014-91265 A (TOPPAN PRINTING CO LTD) 19 May 2014 (2014-05-19) entire text | 1-7 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 July 2022** | **09 August 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

## INTERNATIONAL SEARCH REPORT

| International application No. |
| --- |
| **PCT/JP2022/025589** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2013-0001004 A (AEKYUNG PNT CO., LTD.) 03 January 2013 (2013-01-03)<br>entire text | 1-7 |
| A | JP 5-8352 A (LION CORP) 19 January 1993 (1993-01-19)<br>entire text | 1-7 |
| A | US 2010/0279046 A1 (ASHMAN, Philip Colin) 04 November 2010 (2010-11-04)<br>entire text | 1-7 |
| A | KR 20-0325110 Y1 (LG HOUSEHOLD & HEALTH CARE LTD.) 02 September 2003<br>(2003-09-02)<br>entire text | 1-7 |
| A | JP 2020-157505 A (KYODO PRINTING CO LTD) 01 October 2020 (2020-10-01)<br>entire text | 1-7 |
| A | JP 2021-53861 A (DAINIPPON PRINTING CO LTD) 08 April 2021 (2021-04-08)<br>entire text | 1-7 |
| A | WO 2021/070198 A1 (EPL LIMITED) 15 April 2021 (2021-04-15)<br>entire text | 1-7 |

Form PCT/ISA/210 (second sheet) (January 2015)

**INTERNATIONAL SEARCH REPORT**
Information on patent family members

International application No.

**PCT/JP2022/025589**

| Patent document cited in search report | | | Publication date (day/month/year) | Patent family member(s) | | | Publication date (day/month/year) |
|---|---|---|---|---|---|---|---|
| WO | 2020/193562 | A1 | 01 October 2020 | EP | 3715105 | A1 | |
| | | | | CN | 113748016 | A | |
| JP | 2017-65709 | A | 06 April 2017 | (Family: none) | | | |
| KR | 10-2017-0000170 | A | 02 January 2017 | (Family: none) | | | |
| JP | 2007-30222 | A | 08 February 2007 | (Family: none) | | | |
| JP | 2006-210573 | A | 10 August 2006 | (Family: none) | | | |
| JP | 2014-91265 | A | 19 May 2014 | (Family: none) | | | |
| KR | 10-2013-0001004 | A | 03 January 2013 | (Family: none) | | | |
| JP | 5-8352 | A | 19 January 1993 | (Family: none) | | | |
| US | 2010/0279046 | A1 | 04 November 2010 | WO | 2008/135755 | A1 | |
| | | | | EP | 2155488 | A1 | |
| | | | | CA | 2684102 | A | |
| | | | | KR | 10-2010-0029185 | A | |
| | | | | CN | 101711201 | A | |
| | | | | MX | 2009011772 | A | |
| | | | | ZA | 200907380 | A | |
| KR | 20-0325110 | Y1 | 02 September 2003 | (Family: none) | | | |
| JP | 2020-157505 | A | 01 October 2020 | (Family: none) | | | |
| JP | 2021-53861 | A | 08 April 2021 | (Family: none) | | | |
| WO | 2021/070198 | A1 | 15 April 2021 | US | 2021/0308979 | A1 | |
| | | | | EP | 3847011 | A1 | |
| | | | | CN | 113015616 | A | |
| | | | | CA | 3115443 | A | |

Form PCT/ISA/210 (patent family annex) (January 2015)

**REFERENCES CITED IN THE DESCRIPTION**

**Patent documents cited in the description**

- JP 2011121342 A